**Europäisches Patentamt**

**European Patent Office**

**Office européen des brevets**

(19)

(11) Veröffentlichungsnummer: **0 226 748 B1**

# EUROPÄISCHE PATENTSCHRIFT

(12)

(45) Veröffentlichungstag der Patentschrift: **24.07.91**

(51) Int. Cl.⁵: **B29C 31/04, B29C 43/34**

(21) Anmeldenummer: **86114606.6**

(22) Anmeldetag: **22.10.86**

(54) **Vorrichtung zur Strangeinspeisung bei 2- oder 3-Walzen-Kalandern.**

(30) Priorität: **21.12.85 DE 8536141 U**

(43) Veröffentlichungstag der Anmeldung:
**01.07.87 Patentblatt 87/27**

(45) Bekanntmachung des Hinweises auf die
Patenterteilung:
**24.07.91 Patentblatt 91/30**

(84) Benannte Vertragsstaaten:
**CH DE FR IT LI**

(56) Entgegenhaltungen:
**DE-A- 2 536 239**
**FR-A- 2 163 698**
**US-A- 4 250 130**

**PLASTVERARBEITER, Band 37, no. 12, Dezember 1986, Seiten 65-76, Speyer, DE; G.
CAPELLE: " Beschicken von Kalandern
Trend zum Stiftzylinder-Extruder"**

(73) Patentinhaber: **Ramisch Kleinewefers GmbH**
**Neuer Weg 24-40**
**W-4150 Krefeld(DE)**

(72) Erfinder: **Loosen, Reinhard**
**Nassauer Ring 266**
**W-4150 Krefeld(DE)**

(74) Vertreter: **Goddar, Heinz J., Dr. et al**
**FORRESTER & BOEHMERT Widenmayerstrasse 4/l**
**W-8000 München 22(DE)**

## Beschreibung

Die Erfindung betrifft eine Vorrichtung zur Strangeinspeisung bei 2- oder 3-Walzen-Kalandern nach dem einleitenden Teil des Patentanspruches 1.

Mit einer derartigen Vorrichtung werden plastifizierte Massestränge aus PVC, PUR und dergleichen einem Kalander übergeben, mit dem sie ausgewalzt werden. Der Strainer und der Kalander arbeiten im kontinuierlichen Betrieb. Da dem Walzenspalt des Kalanders nur Massestränge übergeben werden können, deren Länge gleich oder kleiner ist als die Breite des Walzenspaltes, muß die Strangeinspeisung diskontinuierlich erfolgen.

In der Praxis wird der aus den Strainer kommende plastifizierte Massestrang auf dem Beschickband abgelegt, das mit Voreilung läuft, dessen Transportgeschwindigkeit also größer ist als die Austrittsgeschwindigkeit des Massestranges am Strainer. Dementsprechend entsteht eine Friktion zwischen Massestrang und Beschickband. Der Massestrang wird am Strainerkopf auf die erforderliche Länge abgeschnitten, wodurch gleichzeitig die Friktion zwischen Massestrang und Beschickband beendet wird. Der abgeschnittene Massestrang wird dem Walzenspalt vorgelegt und durch die Abwurfeinrichtung in den Walzenspalt befördert.

Die Friktion zwischen Massestrang und Beschickband ist erforderlich, um einen bestimmten Abstand zwischen den einzelnen Massesträngen zu erreichen, damit die Abwurfeinrichtung Zeit hat, den Massestrang von Beschickband in den Walzenspalt zu befördern, bevor der nächste Massestrang nachfolgt.

Diesem System sind in Bezug auf die Länge des Massestranges gewisse Grenzen gesetzt, da ab einer bestimmten Länge die Friktion zwischen Massestrang und Beschickband nicht mehr gewährleistet ist, weil die Friktion vom Auflagegewicht und der Haftung des Massestranges auf dem Beschickband abhängt. Ab einer gewissen Breite des Kalanders kann die bekannte Vorrichtung deswegen nicht mehr eingesetzt werden.

Aufgabe der Erfindung ist es, eine Vorrichtung der eingangs beschriebenen Gattung so zu verbessern, daß das Friktionieren zwischen Massestrang und Beschickband nicht mehr erforderlich ist.

Diese Aufgabe wird in Weiterbildung der eingangs genannten Vorrichtung durch die im Kennzeichen des Patentanspruches 1 aufgeführten Merkmale gelöst. Vorteilhafte Ausführungsformen sind Gegenstand der Unteransprüche 2 bis 8.

Bei der erfindungsgemäßen Vorrichtung werden die Aufnahme des jeweils vom Strainer abgegebenen Massestrangs einerseits und der Abwurf eines Massestrangs andererseits von unterschiedlichen Bändern übernommen. Die jeweils parallelen Bänder arbeiten wechselweise, so daß das dritte Band die andere Funktion übernehmen kann, ohne daß eine Friktion zwischen Massestrang und Band erforderlich ist oder auftritt.

Wenn, wie dies bei einer Ausführungsform der Erfindung vorgesehen ist, den Beschickband zwei zueinander parallele Zuführbänder vorgeschaltet sind, deren Aufnahmeenden wechselweise unter die Austragsöffnung des Strainers bewegbar sind und deren Übergabeenden oberhalb des Beschickbandes angeordnet sind, kann die Geschwindigkeit jedes Zuführbandes zwischen einer Aufnahmegeschwindigkeit und einer größeren Übergabegeschwindigkeit veränderbar sein. Die beiden Zuführbänder nehmen wechselweise den aus den Strainerkopf austretenden Massestrang auf und übergeben den abgeschnittenen Massestrang mit höherer Geschwindigkeit dem mit entsprechender Geschwindigkeit laufenden Beschickband, welches den abgeschnittenen Massestrang bis in den Bereich des Walzenspaltes transportiert.

Wenn, wie dies eine andere Ausführungsform vorsieht, zwei zueinander parallele Beschickbänder vorgesehen sind, denen ein Zuführband zugeschaltet ist, dessen Aufnahmeende unter der Austragsöffnung des Strainers angeordnet ist und dessen Übergabeende wechselweise über die Beschickbänder bewegbar ist, kann die Geschwindigkeit jedes Beschickbandes zwischen einer Übernahmegeschwindigkeit und einer größeren Beschickgeschwindigkeit umgeschaltet werden. Der aus dem Strainerkopf austretende Massestrang wird von Zuführband aufgenommen und von Zeit zu Zeit am Strainerkopf abgeschnitten. Das Zuführband übergibt den abgeschnittenen Massestrang wechselweise einem der beiden Beschickbänder, die während der Übergabe mit der Geschwindigkeit des Zuführbandes laufen und nach Übernahme eines vollständigen Massestranges diesen mit höherer Beschickgeschwindigkeit zum Walzenspalt transportieren.

Bei beiden vorstehend erörterten Ausführungsformen können Beschickbänder und Zuführbänder im wesentlichen parallel und in Tansportrichtung hintereinander angeordnet sein. Es besteht aber auch die Möglichkeit, Beschickbänder und Zuführbänder unter einem Winkel zueinander anzuordnen.

Vorzugsweise sollte jedes Beschickband zum Abwurf eines Massestranges in den Walzenspalt um seine Längsachse schwenkbar sein.

Im folgenden werden in der Zeichnung dargestellte Ausführungsbeispiele der Erfindung erläutert. Es zeigen:

Fig. 1    schematisch und in perspektivischer Darstellung eine Vorrichtung zur Strangeinspeisung in einen 3-Walzen-Kalander,

Fig. 2    eine andere Ausführung des Gegenstandes nach Fig. 1.

Aus einem Strainer 1 (Extruder) tritt kontinuierlich ein plastifizierter Massestrang 2 aus einem Kunststoff wie PVC, PUR oder dergleichen aus. Der Massestrang 2 wird abschnittsweise einem Walzenspalt eines 3-Walzen-Kalanders 3 Übergeben. Zwischen Strainer 1 und Kalander 3 ist eine Vorrichtung zur Strangeinspeisung angeordnet.

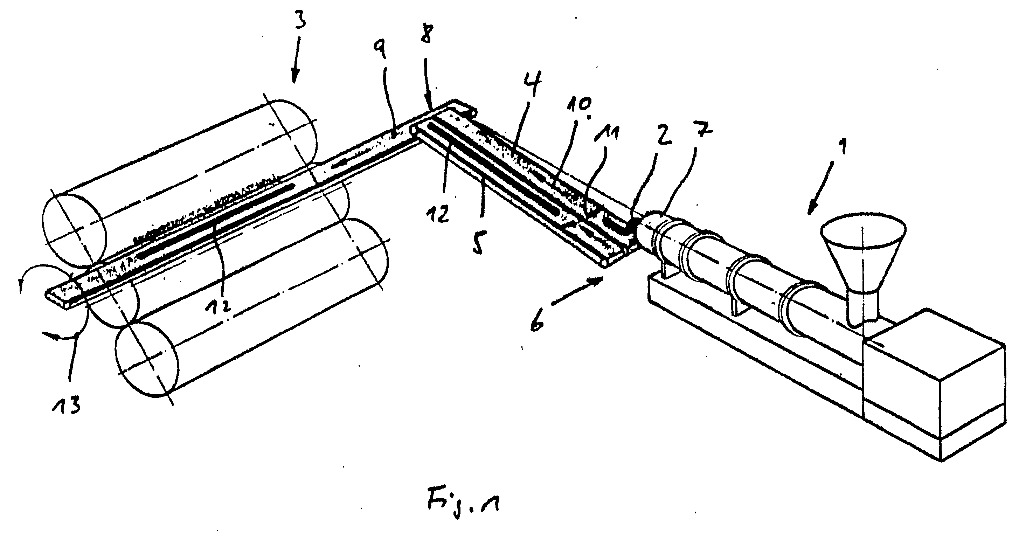

Bei der in Fig. 1 dargestellten Ausführung gehören zur Strangeinspeisung zwei parallel und nebeneinander angeordnete Zuführbänder 4,5 mit nicht dargestellten, zugeordneten Antrieben. Die Zuführbänder 4,5 sind um nicht dargestellte Achsen schwenkbar so angeordnet, daß ihre Aufnahmeenden 6 jeweils wechselweise unter den Strainerkopf 7 bewegbar sind, aus dem der Massestrang 2 austritt. Die Übergabeenden 8 der Zuführbänder 4,5 sind oberhalb eines Beschickbandes 9 angeordnet, welches sich parallel zum und oberhalb des Walzenspaltes des Kalanders 3 erstreckt. Das Beschickband 9 weist einen nicht dargestellten zugeordneten Antrieb auf.

Die in Fig. 1 dargestellte Vorrichtung arbeitet wie folgt:
Der aus dem Strainerkopf 7 austretende Massestrang 2 wird auf dem Zuführband 4 abgelegt, dessen Bandgeschwindigkeit der Austrittsgeschwindigkeit des Massestranges 2 entspricht. Dabei wird der Massestrang 2 in Richtung des Pfeils 10 mitgenommen. Wenn der Massestrang 2 eine bestimmte Länge erreicht hat, wird er abgeschnitten. Gleichzeitig werden beide Zuführbänder 4,5 in Richtung des Doppelpfeils 11 verschwenkt, so daß das Aufnahmeende 6 des anderen Zuführbandes 5 unter den Strainerkopf 7 gelangt.

In Fig. 1 ist auf dem Zuführband 5 ein Abschnitt 12 des Massestrangs dargestellt. Während der Massestrang 2 auf dem Zuführband 4 abgelegt wird, wird der Abschnitt 12 mit einer höheren Übergabegeschwindigkeit dem Beschickband 9 übergeben, welches mit einer entsprechenden Geschwindigkeit läuft. Der dem Beschickband 9 übergebene Abschnitt 12 wird von diesen bis über den Walzenspalt des Kalanders 3 transportiert und dann in den Walzenspalt abgeworfen. Dazu ist das Beschickband 9 oder zumindest sein sich im Bereich des Walzenspaltes befindlicher Teil um die Längsachse des Beschickbandes 9 schwenkbar, wie das durch den Pfeil 13 angedeutet ist. Wenn der auf dem Zuführband 4 abgelegte Massestrang die Länge des Abschnitts 12 erreicht hat, wird er abgeschnitten und nach dem Verschwenken der Zuführbänder 4,5 erfolgt die Strangeinspeisung wie oben beschrieben.

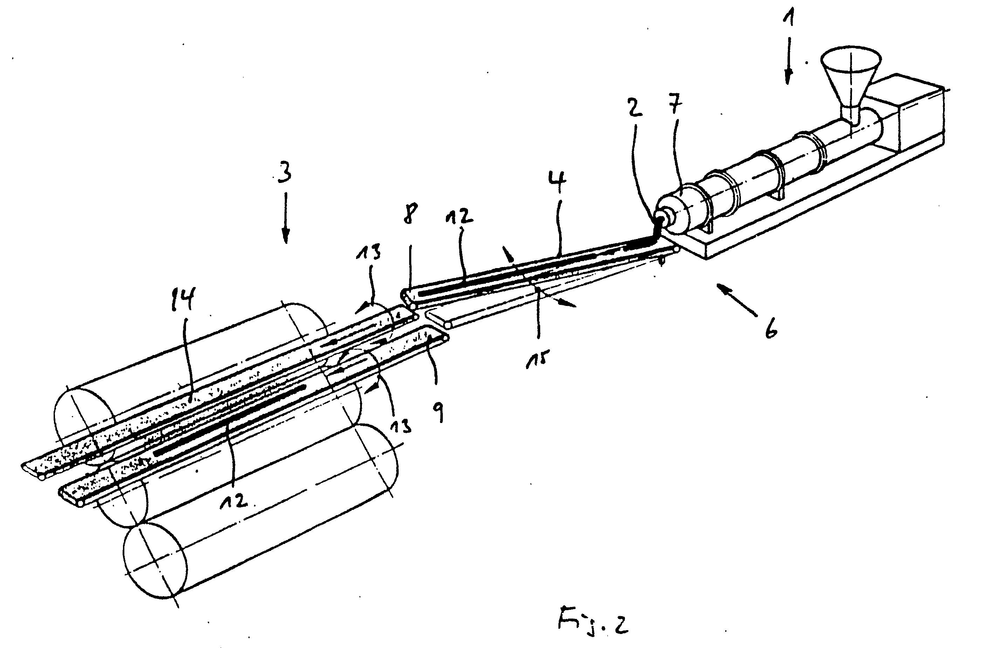

Bei der in Fig. 2 dargestellten Ausführung bezeichnen gleiche Bezugszeichen gleiche Teile. Zwischen dem Strainer 1 und dem Kalander 3 ist nur ein einziges Zuführband 4 vorgesehen, dessen Aufnahmeende 6 sich unter dem Strainerkopf 7 befindet. Dafür sind zwei Beschickbänder 9 und 14 vorgesehen, die nebeneinander und parallel zueinander oberhalb des Walzenspaltes des Kalanders 3 angeordnet sind. Das Zuführband 4 ist in Richtung des Pfeils 15 so verschwenkbar, daß sein Übergabeende 8 wechselweise über eines der Beschickbänder 9 oder 14 gebracht werden kann. Beide Beschickbänder 9 und 14 sind um ihre Längsachse in Richtung der Pfeile 13 schwenkbar und dienen somit gleichzeitig als Abwurfeinrichtung.

Die in Fig. 2 dargestellte Vorrichtung arbeitet wie folgt:
Der kontinuierlich aus dem Strainerkopf 7 austretende Massestrang 2 wird auf dem mit entsprechender Geschwindigkeit laufenden Zuführband 4 abgelegt und von Zeit zu Zeit abgeschnitten, so daß voneinander unabhänige Abschnitte 12 entstehen. Jeweils ein Abschnitt 12 wird einem der Beschickbänder 9,14 übergeben, wobei das betreffende Beschickband während der Übergabe mit der gleichen Geschwindigkeit läuft wie das Zuführband 4. Nach der Übergabe eines Abschnitts 12 wird erforderlichenfalls die Geschwindigkeit des betreffenden Beschickbandes 9 oder 14 erhöht und der Abschnitt 12 über den Walzenspalt gebracht sowie dort durch Verschwenken des betreffenden Beschickbandes abgeworfen. Unmittelbar nach der Übergabe eines Abschnittes 12 wird das Zuführband verschwenkt, so daß sein Übergabeende 8 sich über dem anderen Beschickband befindet.

## Patentansprüche

1. Vorrichtung zur Strangeinspeisung bei 2- oder 3-Walzen-Kalandern, mit der ein aus einem Strainer (1) kontinuierlich austretender plastifizierter Massestrang (2) auf einem Beschickband (9) abgelegt wird, dessen Transportgeschwindigkeit größer ist als die Austrittsgeschwindigkeit des Massestranges (2) am Strainer (1) und das sich parallel zum Walzenspalt des Kalanders (3) erstreckt, wobei eine Abwurfeinrichtung die nacheinander angeführten Massestränge (2) in den Walzenspalt befördert, dadurch gekennzeichnet, daß außer dem Beschickband (9) noch zwei weitere Bänder (4, 5; 4, 14) vorgesehen sind; daß jeweils zwei Bänder (4, 5; 9, 14) parallel zueinander angeordnet sind; und daß die Bänder unabhängig voneinander Steuerbare Antriebe besitzen.

2. Vorrichtung nach Anspruch 1, dadurch gekennzeichnet, daß dem Beschickband (9) zwei zueinander parallele Zuführbänder (4, 5) vorgeschaltet sind, deren Aufnahmeenden (6) wechselweise unter die Austragsöffnung des Strainers (1) bewegbar sind und deren Übergabeenden (8) oberhalb des Beschickbandes (9) angeordnet sind.

3. Vorrichtung nach Anspruch 2, dadurch gekennzeichnet, daß die Geschwindigkeit jedes Zuführbandes (4, 5) zwischen einer Aufnahmegeschwindigkeit und einer größeren Übergabegeschwindigkeit veränderbar ist.

4. Vorrichtung nach Anspruch 1, dadurch gekennzeichnet, daß ein zu dem Beschickband (9) paralleles Zusatz-Beschickband (14) vorgesehen ist, wobei den beiden Beschickbändern (9, 14) ein Zuführband (4) vorgeschaltet ist, dessen Aufnahmeende (6) unter der Austragsöffnung des Strainers (1) angeordnet ist und dessen Übergabeende (8) wechselweise über die Beschickbänder (9, 14) bewegbar ist.

5. Vorrichtung nach Anspruch 4, dadurch gekennzeichnet, daß die Geschwindigkeit jedes Beschickbandes (9, 14) zwischen einer Übernahmegeschwindigkeit und einer größeren Beschickgeschwindigkeit umschaltbar ist.

6. Vorrichtung nach einem der Ansprüche 1 bis 5, dadurch gekennzeichnet, daß Beschickbänder (9, 14) und Zuführbänder (4, 5) im wesentlichen parallel und in Transportrichtung hintereinander angeordnet sind.

7. Vorrichtung nach einem der Ansprüche 1 bis 6, dadurch gekennzeichnet, daß Beschickbänder (9, 14) und Zuführbänder (4, 5) unter einem Winkel zueinander angeordnet sind.

8. Vorrichtung nach einem der Ansprüche 1 bis 7, dadurch gekennzeichnet, daß jedes Beschickband (9, 14) zum Abwurf eines Massestranges (12) in den Walzenspalt um seine Laufachse schwenkbar ist.

## Claims

1. Apparatus for strand-infeed in two-roller or three-roller calenders, by means of which a plasticised strand of material (2) continuously emerging from a strainer (1) is deposited on a charging belt (9), the speed of transport of which is greater than the exit speed of the strand (2) at the strainer (1) and which extends parallel to the nip of the rollers of the calender (3), a release mechanism feeding the successively supplied strands (2) into the nip, characterised in that another two belts (4, 5; 4, 15) are provided in addition to the charging belt (9); in that each two belts (4, 5; 9, 14) are disposed parallel to one another; and in that the belts have drives which are controllable independently of one another.

2. Apparatus according to claim 1, characterised in that two parallel feed belts (4, 5) are provided upstream of the charging belt (9), their receiving ends (6) being movable alternately beneath the delivery aperture of the strainer (1) and their transfer ends (8) being disposed above the charging belt (9).

3. Apparatus according to claim 2, characterised in that the speed of each feed belt (4, 5) is variable between a receiving speed and a higher transfer speed.

4. Apparatus according to claim 1, characterised in that an additional charging belt (14) is provided which is parallel to the charging belt (9), a feed belt (4) being disposed upstream of the two charging belts (9, 14), its receiving end (6) being disposed beneath the delivery aperture of the strainer (1) and its transfer end (8) being movable alternately over the charging belts (9, 14).

5. Apparatus according to claim 4, characterised in that the speed of each charging belt (9, 14) is adapted to be changed between a receiving speed and a higher charging speed.

6. Apparatus according to any one of claims 1 to 5, characterised in that the charging belts (9, 14) and feed belts (4, 5) are disposed substantially parallel and consecutively in the direction of transport.

7. Apparatus according to any one of claims 1 to 6, characterised in that the charging belts (9, 14) and feed belts (4, 5) are disposed at an angle to one another.

8. Apparatus according to any one of claims 1 to 7, characterised in that each charging belt (9, 14) is pivotable about its axis of movement to release a strand of material (12) into the nip.

## Revendications

1. Dispositif pour l'alimentation en boudins dans des calandres à deux ou trois cylindres, à l'aide duquel un boudin de pâte plastique (2) sortant en continu d'une extrudeuse (1), est déposé sur une bande d'alimentation (9) dont la vitesse de transport est supérieure à la vitesse de sortie du boudin de pâte (2) au niveau de l'extrudeuse (1), et qui s'étend parallèlement à l'emprise des cylindres de la calandre (3), un dispositif d'éjection transportant dans l'emprise des cylindres les boudins de pâte (2) amenés successivement, caractérisé en ce qu'en plus de la bande d'alimentation (9), deux autres bandes (4, 5; 4, 14) sont prévues, en ce que respectivement deux bandes (4, 5; 9, 14) sont disposées parallèlement entre-elles, et en ce que les bandes comportent des dispositifs d'entrainement pouvant être commandés indépendamment les uns des autres.

2. Dispositif selon la revendication 1, caractérisé en ce que la bande d'alimentation (9) est précédée par deux bandes d'amenée (4, 5) parallèles entre-elles, dont les extrémités de réceptionnement (6) peuvent être déplacées alternativement en-dessous de l'orifice de sortie de l'extrudeuse (1), et dont les extrémités de transfert (8) sont situées au-dessus de la bande d'alimentation (9).

3. Dispositif selon la revendication 2, caractérisé en ce qu'il est possible de faire varier la vitesse de chaque bande d'amenée (4, 5), entre une vitesse de réceptionnement et une vitesse plus élevée de transfert.

4. Dispositif selon la revendication 1, caractérisé en ce qu'il est prévu une bande d'alimentation supplémentaire (14) parallèle à la bande d'alimentation (9), les deux bandes d'alimentation (9, 14) étant précédées par une bande d'amenée (4) dont l'extrémité de réceptionnement (6) est disposée sous l'orifice de sortie de l'extrudeuse (1), et dont l'extrémité de transfert (8) peut être déplacée alternativement au-dessus des bandes d'alimentation (9, 14).

5. Dispositif selon la revendication 4, caractérisé en ce que la vitesse de chacune des bandes d'alimentation (9, 14) peut être commutée entre une vitesse de réceptionnement et une vitesse supérieure d'alimentation.

6. Dispositif selon l'une des revendications 1 à 5, caractérisé en ce que les bandes d'alimentation (9, 14) et les bandes d'amenée (4, 5) sont disposées de manière à être sensiblement parallèles entre-elles et en se succédant dans la direction du transport.

7. Dispositif selon l'une des revendications 1 à 6, caractérisé en ce que les bandes d'alimentation (9, 14) et les bandes d'amenée (4, 5) sont disposées de manière à former entre-elles un certain angle.

8. Dispositif selon l'une des revendications 1 à 7 caractérisé en ce que chaque bande d'alimentation (9, 14) peut pivoter autour de son axe de déplacement en vue de l'éjection d'un boudin de pâte (12) dans l'emprise des cylindres.

Fig. 1

EP 0 226 748 B1

Fig. 2